# EUROPEAN PATENT APPLICATION

(11) **EP 0 530 837 A1**
(43) Date of publication of application: **10.03.1993**
(21) Application number: 92115198.1
(22) Date of filing: 04.09.1992
(51) Int. Cl.: G11B 5/41, A46B 3/00, A46D 3/05

(54) **Brush for cleaning magnetic heads, method of manufacture**

(30) Priority: 06.09.1991 JP 254441/91
(71) Applicant: PIONEER ELECTRONIC CORPORATION, Meguro-ku Tokyo-to (JP); Mitsumi Electric Company Ltd., Chofu-shi Tokyo (JP)
(72) Inventor: Saito, Akio, c/o Kawagoe Koujou, Pioneer, Ooaza Yamada, Kawagoe-shi, Saitama-ken (JP); Ikeda, Hideyuki, c/o Yamagata Mitsumi Co., Ltd., Yamagata-shi, Yamagata-ken (JP)
(74) Representative: Bohnenberger, Johannes, Dr.

(57) **Abstract**

A brush for cleaning a part of an instrument, in particular magnetic head, has (13) a core rod (14), a plurality of bristles (13b) each of which is disposed on the core rod (14) and covered and gripped by a metal holder (12). Both ends of the bristle (13b) are projected from the metal holder (12) to form brush bristles (13b). A method is disclosed whereby the bristles are wound about two parallel core rods (14) and, after clamping with a metal holder (12) each, are severed in the middle thus producing two brushes simultaneously.

## Description

The present invention relates to a cleaning brush for a precision instrument such as a magnetic head of a tape recorder and a method of making the brush.

Japanese Utility Model Publication 51-7087 discloses a magnetic head cleaning device of a tape recorder. The cleaning device is provided in front of the magnetic head for removing magnet powder and dust adhered on the front surface of the head, thereby maintaining a clean head all the time.

The cleaning device comprises a crank lever having a brush pivotally provided in front of the magnetic head so as not to disturb the movement of the magnetic tape when reproducing the tape. The brush is disposed between the tape and the head and reciprocated to clean the head. Therefore, it is necessary to make the brush to have a very small thickness with high rigidity. However, it is difficult to manufacture such a thin brush. Even if such a brush is practically made, the manufacturing cost becomes high.

An object of the present invention is to provide a cleaning brush for a precision instrument which has sufficient rigidity in spite of a thin thickness.

Another object of the present invention is to provide a brush which may be manufactured at a low manufacturing cost.

According to the present invention, there is provided a cleaning brush for a precision instrument comprising a metal having a lever portion and a holder, and a brush portion provided on the holder and having a core rod engaged with the holder and a plurality of bristles wound on the rod in spiral with a predetermined length, the holder being compressed so as to firmly hold the rod with the bristles therein.

In an aspect of the invention, a method of making the cleaning brush comprises the steps of winding a filament in spiral between a pair of rods disposed at a predetermined distance, engaging the rod having the bristles with a groove of a holder, compressing the holder to enclose the filament on the rod therein, cutting the filament so as to form bristles.

In the present invention, the rod and the bristles of the brush are enclosed with the holder by press operation. Therefore, it is effective to hold the bristles in the holder and to improve the rigidity thereof. Although the holder has a very small diameter as 1.0 mm, the holder can sufficiently resist the bending stress. As a result, it is possible to engage the brush portion with a front portion of the magnetic head in the vertical direction at a uniform force.

The other objects and features of this invention will become understood from the following description with reference to the accompanying drawings.
Fig. 1 is a perspective view schematically showing a magnetic head having a cleaning brush according to the present invention;
Fig. 2 is an enlarged perspective view of the cleaning brush;
Fig. 3 is a sectional view of a brush portion of the brush;
Fig. 4a to 4g are diagrams showing steps of a process in making the cleaning brush; and
Fig. 5 is a perspective view showing a tool used in a modification of the process.

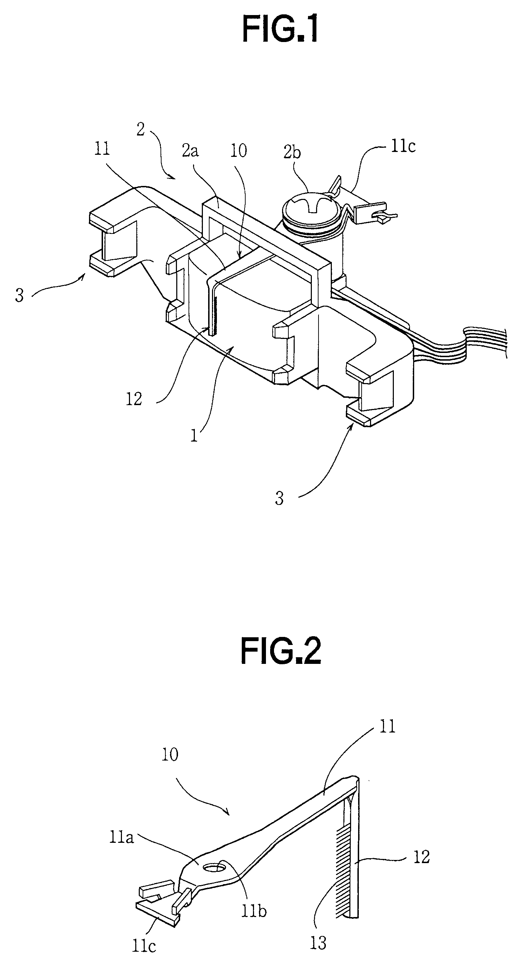

Referring to Fig. 1 showing a magnetic head having a cleaning brush according to the present invention, a magnetic head 1 is mounted on a head base 2 having tape guides 3 integral with the base. A cleaning brush 10 is mounted on the head base 2.

Referring to Fig. 2, the cleaning brush 10 has an L-shape and comprises a horizontal lever 11, a vertical holder 12 perpendicular to the lever 11, and a brush portion 13 having a plurality of bristles fastened in the holder 12. The lever 11 has a pivot portion 11a having a hole 11b and an end portion 11c. The pivot portion 11a is pivotally mounted on the base 2 by a pivot shaft 2b.

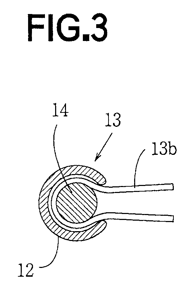

Referring to Fig. 3, the brush portion 13 has a core rod 14 engaged with the holder 12 and bristles 13b. Each bristle 13b is wound on the periphery of the core rod 14 and projected a predetermined length from the holder.

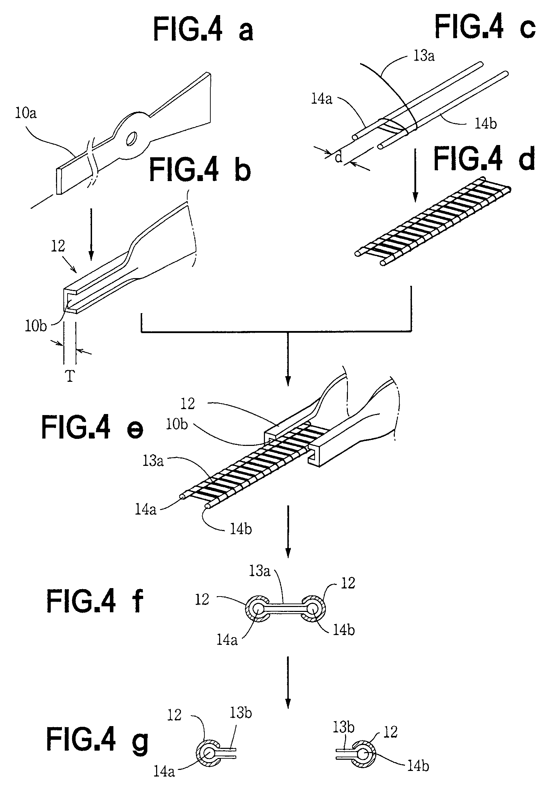

The cleaning brush 10 is manufactured in accordance with a process shown in Figs. 4a to 4g.

As shown in Fig. 4a, a metal body 10a of the cleaning brush 10 is made of a stainless steel strip of non-magnetic material. As shown in Fig. 4b, opposite edges of the metal body are bent to form a groove 10b having a thickness T' of 0.5 mm. On the other hand, as shown in Fig. 4c, a pair of core rods 14a and 14b are disposed in parallel at a distance d there-between. As shown Fig. 4d, a filament 13a of nylon is wound in spiral on the rods 14a and 14b and adhered to the rods at both ends thereof and at proper positions.

The rod is a fine wire made of stainless steel of non-magnetic material and the diameter thereof is 0.2 mm. Since a desired length of each bristle 13b is 0.7 mm, the distance d is 1.5 mm which is slightly longer than twice the length of the bristle. The filament 13a is a fishing line (No. 2) made of nylon having the diameter of 74µm. The density of windings of the string 13a is determined at 13 winds/mm.

As shown in Fig. 4e, the rods 14a and 14b having the wound filament 13a are engaged with the grooves 10b of the respective holders 12. As shown in Fig. 4f, the bent portions of each holder 12 are inwardly compressed by forming operation of a press to surround the rod. It is preferable to compress the bent portions to enclose a half of the circumference of the rod or more. Then, the core rods projected from the holder 12 are cut and the filament 13a is cut in the middle portion between the rods 14a and 14b as shown in Fig. 4g, so that the bristles 13b are separately formed on the respective holders 12.

In the process, two brushes are made at the same time. The outer surface of the holder 12 is grinned to form cylindrical configuration. The diameter of the holder 12 is 1.0 mm.

The metal body 10a is machined by press operation to form the lever 11 as shown in Fig. 2.

The remaining rods 14a and 14b with the filament 13a are used to make other cleaning brushes. Thus, a number of cleaning brushes are successively made.

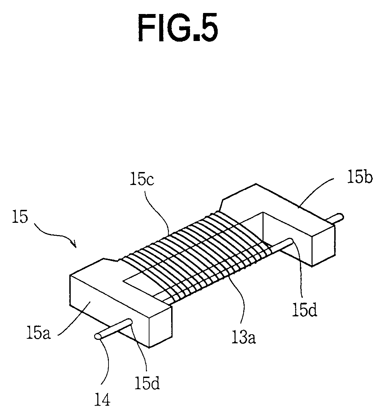

Fig. 5 shows a modification of the process.

The process uses a frame 15 having a U-shape in plan. The frame 15 has a recess 15c and a pair of lug portions 15a and 15b having holes 15d. The core rod 14 is inserted into the holes 15d and the filament 13a is wound in spiral on the rod 14 and the frame 15 at the recess 15c. The filament 13a is adhered to the frame 15. The rod having the filament 13a is engaged with the groove 10b of the holder 12 and enclosed in the holder by press operation. The filament 13a is cut at a predetermined length so as to form the bristles 13b.

In place of a nylon filament, other filament such as synthetic resin, carbon, ceramic, glass, or metallic filament can be used. A stainless steel strip can be replaced aluminum, steel, or copper strip.

Describing a mounting operation of the cleaning brush on the magnetic head with reference to Fig. 1, the end portion 11c of the lever 11 is inserted into a space between a frame 2a of the head base 2 and the magnetic head 1, while the holder 12 having the brush portion 13 corresponds to the front of the head 1. The pivot portion 11a is pivotally mounted on the rear portion of the base 2 with the pivot shaft 2b at the hole 11b.

The end portion 11c is operatively connected to a drive means (not shown) so that the lever 11 is pivoted about the shaft 2b, while the holder 12 is moved along the front portion of the head 1 to clean the head with the brush portion 13.

As a power for the drive means, motors of the tape recorder can be used.

If a motor of an ejecting system or a loading system of a cassette tape is used, the cleaning brush 10 is operated whenever the cassette tape is ejected form or loaded on the tape recorder. If a motor for an automatic reverse system is used, the cleaning brush 10 is operated whenever the running direction of the tape changes.

The cleaning brush of the present invention is used for other precision instruments. Furthermore, the cleaning brush is manually operated to clean a necessary portion of the instrument.

In accordance with the present invention, the bristles are held in the holder through the core rod by pressing the holder. Since the bristles are firmly held in the holder, the bristles are prevented from removing from the holder portion during the cleaning operation.

The holder is formed into a cylindrical configuration so that the rigidity of the holder portion is improved. Therefore, even if an external force is exerted on the holder, the brush portion is not deformed.

While the presently preferred embodiments of the present invention has been shown and described, it is to be understood that these disclosures are for the purpose of illustration and that various changes and modifications may be made without departing from the scope of the invention as set forth in the appended claims.

## Claims

1. A brush for cleaning a part of an instrument characterized by comprising:
a core rod (14);
an elongated metal holder (12) engaged with a part of the periphery of the core rod (14); and
a plurality of bristles (13b) each of which is disposed on the core rod (14) and gripped by the metal holder (12), and both ends of the bristles (13b) projected from the metal holder (12) a predetermined length.

2. A brush according to claim 1, characterized in that the metal holder (12) engages with the periphery of the core rod (14) over the half of its periphery.

3. A brush according to one of claims 1 - 2, characterized in that the metal holder (12) has a round periphery in cross section.

4. A method of making a brush comprising:
helically winding a filament (13a) around a pair of parallel core rods (14a, 14b);
gripping at least one of the core rods (14a, 14b) with a metal holder (12) so as to engage the filament (13a) on the core rod (14a, 14b); and
cutting the filament between the core rods (14a, 14b) to provide bristles (13b).
